# EUROPÄISCHE PATENTANMELDUNG

(11) **EP 2 679 613 A1**
(43) Veröffentlichungstag der Anmeldung: **01.01.2014**
(21) Anmeldenummer: 12173505.4
(22) Anmeldetag: 26.06.2012
(51) Int. Cl.: C08G 8/20, C08G 8/28, C08L 61/04, C08L 61/14, C08L 61/34, C04B 28/02, C08K 7/00, C09K 8/487

(54) **Tonverträgliches Additiv für bauchemische Produkte**

(71) Anmelder: Construction Research & Technology GmbH, 83308 Trostberg (DE)
(72) Erfinder: Dengler, Joachim, 83342 Tacherting (DE); Wimmer, Barbara, 83342 Tacherting (DE)

(57) **Zusammenfassung**

Die Erfindung betrifft ein Säuregruppen und/oder deren Salze enthaltendes Kondensationsprodukt auf Basis von Monomeren, wobei die Monomere mindestens ein Monomer mit einem Aldehydrest und mindestens ein Monomer mit einem Ketonrest, welcher mindestens einen nicht aromatischen Rest trägt, umfassen, wobei die Monomere weiterhin mindestens ein Monomer auf Basis einer aromatischen Verbindung, welches keine Aldehydgruppen und keine Ketogruppen trägt, umfassen. Weiterhin werden die Herstellung und die Verwendung dieser Kondensationsprodukte in bauchemischen Produkten offenbart.

## Beschreibung

Die Erfindung betrifft ein Säuregruppen und/oder deren Salze enthaltendes Kondensationsprodukt auf Basis von Monomeren, wobei die Monomere Aldehyde, Ketone mit mindestens einem nicht aromatischen Rest sowie aromatischen Verbindungen, welche keine Aldehydgruppen und keine Ketogruppen tragen, umfassen. Weiterhin werden die Herstellung und die Verwendung dieser Kondensationsprodukte in bauchemischen Produkten offenbart.

Aus der DE-AS 2 341 923 sind gut wasserlösliche Kondensationsprodukte aus Cycloalkanonen und Formaldehyd unter Verwendung von Natriumsulfit als Säuregruppen einführender Stoff bekannt. Ein Nachteil dieser Kondensationsprodukte ist jedoch deren geringe thermische Stabilität. So entstehen z. B. beim Einengen einer Lösung der Cycloalkanon-Formaldehyd-Kondensationsprodukte selbst unter schonenden Bedingungen (ca. 50 °C) bereits weitgehend wasserunlösliche pulverförmige Verbindungen. Auch andere sulfonsäuremodifizierte Formaldehyd-Kondensationsprodukte, beispielsweise auf Basis von Harnstoff, zersetzen sich bei Temperaturen um den Siedepunkt des Wassers. Diese Kondensationsprodukte können deshalb bei hohen Temperaturen, wie sie z. B. in der Erdöltechnik bei Tiefbohrungen auftreten, nicht eingesetzt werden.

Die Kondensation von symmetrischen oder unsymmetrischen Ketonen mit acyclischen aliphatischen, araliphatischen und/oder aromatischen Resten und Aldehyden in Gegenwart von Natriumsulfit ist aus der DE 3144673 bekannt. Sie führt in ihrer Endstufe zu wasserlöslichen Harzen welche Sulfitgruppen enthalten. Die Verwendung von Natriumsulfit als alkalischer Katalysator einerseits und als Säuregruppen einführender Stoff andererseits ermöglicht die Bildung wasserlöslicher Kondensationsprodukte, die sich zum Beispiel als Zusätze für anorganische Bindemittel zur Verbesserung ihrer Eigenschaften eignen und auch bei hohen Temperaturen stabil sind.

Derartige Kondensationsprodukte haben jedoch den Nachteil, dass sie eine tiefrote Farbe aufweisen und als Additiv für bauchemische Produkte, beispielsweise Mörtel oder Beton, zu einer starken Rotfärbung der Oberfläche der ausgehärteten Produkte führen. Auch die Effizienz dieser Kondensationsprodukte als Dispergiermittel für anorganische Bindemittel enthaltende bauchemische Mischungen ist nicht zufriedenstellend.

Als Dispergiermittel für anorganische Bindemittelsysteme werden heute im wesentlichen Polycarboxylatether eingesetzt, da sie sehr gute verflüssigende Eigenschaften und einen guten Erhalt der Fließfähigkeit über die Zeit (Slump-Erhalt) ermöglichen. Polycarboxylatether besitzen jedoch den Nachteil, dass sie gegenüber Tonen, insbesondere Smektit, eine hohe Empfindlichkeit aufweisen und schon bei geringen Tongehalten vollständig inaktiviert werden. Ton kann hierbei z. B. über die Zuschlagsstoffe oder über Kalkstein in die anorganischen Bindemittelsysteme eingetragen werden, was in vielen Ländern, aufgrund des natürlichen Tongehalts der eingesetzten Rohstoffe, ein großes Problem darstellt. Es ist weiterhin bekannt, daß ß-Naphthalinsulfonat-Formaldehyd-Kondensate (BNS) eine akzeptable Tonverträglichkeit besitzt, aber den Nachteil eines geringeren Slump-Erhalts und einer schlechten Wirksamkeit bei niedrigen Wasser-Zement-Verhältnissen (< 0,35) aufweist.

Aufgabe der vorliegenden Erfindung ist deshalb die Bereitstellung von Produkten, welche als Additive in bauchemischen Produkten keine Verfärbung verursachen. Weiterhin sollte die Produkte thermostabil sein und sich auch noch bei hohen Temperaturen z. B. als Zusatzmittel zur Verbesserung der Eigenschaften wässriger anorganischer Systeme eignen. Insbesondere sollten die bereits guten Eigenschaften der nach dem Stand der Technik bekannten Produkte, beispielsweise als Dispergiermittel für anorganische Bindemittel, weiter verbessert werden. Eine weitere Aufgabe der vorliegenden Erfindung war es, ein Additive für bauchemische Produkte, enthaltend ein anorganisches Bindemittel zur Verfügung zu stellen, welches gegenüber Tonen, insbesondere Smektit, eine hohe Verträglichkeit aufweist.

Gelöst wurde diese Aufgabe durch ein Säuregruppen und/oder deren Salze enthaltendes Kondensationsprodukt auf Basis von Monomeren, wobei die Monomere
I) mindestens ein Monomer mit einem Aldehydrest und
II) mindestens ein Monomer mit einem Ketonrest, welcher mindestens einen nicht aromatischen Rest trägt, umfassen, wobei die Monomere weiterhin
III) mindestens ein Monomer auf Basis einer aromatischen Verbindung, welches keine Aldehydgruppen und keine Ketogruppen trägt, umfassen

Die erfindungsgemäßen Kondensationsprodukte führen als Additive in bauchemischen Produkten, enthaltend ein anorganisches Bindemittel, überraschenderweise zu keiner Verfärbung der Oberfläche der ausgehärteten Produkte. Weiterhin überraschend war, daß die bereits guten Eigenschaften der nach dem Stand der Technik bekannten Kondensationsprodukte, beispielsweise als Dispergiermittel für anorganische Bindemittel enthaltende Systeme, weiter verbessert werden konnten. Insbesondere besitzen die erfindungsgemäßen Kondensationsprodukte eine hohe Toleranz gegenüber Tonen. Die Kondensationsprodukte weisen weiterhin eine hohe Thermostabilität auf. Sie sind im allgemeinen bis zu Temperaturen von mindestens 300 °C stabil. Die Thermostabilität bleibt dabei auch in Gegenwart von Wasser erhalten.

Bevorzugt umfasst die aromatische Verbindung III) am Aromaten mindestens einen Substituenten aus der Reihe -OH, -CH₃, -N(R¹)₂ und -OR², wobei R¹ unabhängig voneinander für Wasserstoff, C₁-C₁₀-Alkyl und Benzyl und R² für Wasserstoff, C₁-C₁₀-Alkyl und Benzyl steht und/oder der Aromat mindestens ein Stickstoffatom im aromatischen Ring aufweist. In einer besonders bevorzugten Ausführungsform trägt der Aromat mindestens zwei Substituenten aus der oben genannten Reihe.

Insbesondere bevorzugt handelt es sich bei der aromatischen Verbindung III) um mindestens eine aus der Reihe Gallussäure, Aminobenzolsulfonsäure, insbesondere Sulfanilsäure, Anilin, Ammoniumbenzoesäure, Dialkoxybenzolsulfonsäure, Dialkoxybenzoesäure, Pyridin, Pyridinmonosulfonsäure, Pyridindisulfonsäure, Pyridincarbonsäure und Pyridindicarbonsäure. Besonders bevorzugt ist hierbei Gallussäure, weiterhin besonders bevorzugt Aminobenzolsulfonsäure.

Als Säuregruppen enthalten die erfindungsgemäßen Kondensationsprodukte vorzugsweise mindestens eine Gruppe aus der Reihe Carboxy-, Phosphono-, Sulfino- und insbesondere Sulfogruppen, wobei diese Gruppen auch über Stickstoff oder Sauerstoff, oder über-N-alkylen oder -O-alkylen-Brücken gebunden sein können, und dann z. B. Sulfamido-, Sulfooxy-, Sulfoalkyloxy-, Sulfinoalkyloxy- oder auch Phosphonooxygruppen sind. Eine Alkylgruppe in diesen Resten besitzt vorzugsweise 1 bis 5 Kohlenstoffatome und ist insbesondere Methyl oder Äthyl. Die erfindungsgemäßen Kondensationsprodukte können auch zwei oder mehrere verschiedene Säuregruppen enthalten.

Der Rest R in R-CHO, also dem Monomeren I), kann Wasserstoff, ein aromatischer oder nichtaromatischer cyclischer oder nichtaromatisch acyclischer sowie ein carbo-oder heterocyclischer Rest oder auch araliphatischer Rest sein, in dem die Zahl der Kohlenstoffatome oder Kohlenstoff- und Heteroatome vorzugsweise 1 bis 10 ist. Aromatische Reste sind z. B. α- oder β-Naphthyl, Phenyl oder Furfuryl, araliphatische Reste z. B. Benzyl oder Phenäthyl, nichtaromatische Reste z. B. Cycloalkyl- und insbesondere Alkylreste, vorzugsweise mit 1 bis 6 Kohlenstoffatomen, wie z. B. Methyl, Äthyl, Propyl und Butyl. Die aliphatischen Reste können auch verzweigt oder ungesättigt sein und sind dann z. B. Vinyl.

Das Monomer I) kann auch durch einen oder mehrere Substituenten, die die Kondensationsreaktion nicht beeinträchtigen, substituiert sein, wie z. B. durch Amino-, Hydroxy-, Alkoxy- oder Alkoxycarbonylgruppen und/oder auch durch die in den Kondensationsprodukten enthaltenen Säuregruppen. Es können auch Aldehyde mit mehr als einer Aldehydgruppe, z. B. Di- oder Trialdehyde, eingesetzt werden, die infolge ihrer erhöhten Reaktivität in einigen Fällen besonders zweckmäßig sein können. Es können auch, z. B. bei den niederen gesättigten Aldehyden wie Formaldehyd oder Acetaldehyd, die polymeren Formen (z. B. Paraformaldehyd oder Paraldehyd) eingesetzt werden.

In einer bevorzugten Ausführungsform handelt es sich bei dem Monomeren I) um mindestens einen Aldehyd aus der Reihe Paraformaldehyd, Formaldehyd, Acetaldehyd, Butyraldehyd, Glyoxal, Glutardialdehyd, Benzaldehyd, Naphtylaldehyd oder Naphtylsulfonsäurealdehyd, 3-Methoxy-propionaldehyd, Acetaldol, Acrolein, Crotonaldehyd, Furfurol, 4-Methoxy-furfurol, Propargylaldehyd, Glyoxylsäure, Propanalsäure, Butanalsäure, Pentanalsäure, Glucose, Saccarose, Zimtaldehyd, Lignine und Lignosulfonate. Besonders bevorzugt wird als Aldehyd Formaldehyd verwendet.

Erfindungsgemäß für das Kondensationsprodukt eingesetzte Monomere II) sind symmetrische oder unsymmetrische Ketone mit acyclischen, aliphatischen, araliphatischen und/oder aromatischen Kohlenwasserstoffresten, wobei aber mindestens ein Rest ein nichtaromatischer Rest ist. Vorzugsweise besitzen die Kohlenwasserstoffreste 1 bis 10 Kohlenstoffatome.

Acyclische aliphatische Reste sind geradkettige oder verzweigte, ungesättigte und vorzugsweise gesättigte Alkylreste, wie z. B. Methyl, Äthyl, Propyl, Butyl, Isobutyl und Nonyl. Araliphatische Reste sind z. B. Benzyl oder Phenäthyl, und aromatische Reste sind z. B. α- oder β-Naphthyl und insbesondere Phenyl.

Die Monomere II) können auch durch einen oder mehrere Substituenten, die die Kondensationsreaktion nicht beeinträchtigen, substituiert sein, wie z. B. durch Amino-, Hydroxy-, Alkoxy- oder Alkoxycarbonylgruppen und/oder auch durch die in den Kondensationsprodukten enthaltenen Säuregruppen.

Insbesondere bevorzugt handelt es sich bei dem Monomer II) um mindestens ein Keton aus der Reihe Methylethylketon, Aceton, Diacetonalkohol, Acetessigsäureethylester, Lävulinsäure, Methyl-vinylketon, Mesityloxid, 2,6-Dimethyl-2,5-heptadien-4-on, Acetophenon, 4-Methoxy-acetophenon, 4-Acetylbenzolsulfonsäure, Diacetyl, Acetylaceton, Benzoylaceton und Cyclohexanon. Insbesondere bevorzugt ist Aceton.

Die Monomere I) und Monomere II) sind in reiner Form, aber auch in Form von Verbindungen mit dem die Säuregruppen einführenden Stoff, z. B. als Aldehydsulfitaddukt oder als Hydroxymethansulfinsäuresalz, einsetzbar. Es können auch zwei oder mehrere verschiedene Aldehyde und/oder Ketone eingesetzt werden.

Die Gesamtzahl der Kohlenstoffatome oder gegebenenfalls Kohlenstoffatome und Heteroatome in den erfindungsgemäß eingesetzten Monomeren I) und Monomeren II) wird bevorzugt so gewählt, dass der hydrophile Charakter der Kondensationsprodukte erhalten bleibt. Sie ist deshalb auch abhängig von der Zahl der Säuregruppen im Kondensationsprodukt, aber auch vom Verhältnis Keton/Aldehyd. Die bevorzugte Gesamtzahl beträgt für die Aldehyde 1 bis 11, für die Ketone 3 bis 12.

Das erfindungsgemäße Kondensationsprodukt umfassen die Monomeren bevorzugt in folgender Zusammensetzung:
25 bis 74 mol-% des Monomeren I),
25 bis 74 mol-% des Monomeren II) und
0,01 bis 30 mol-%, bevorzugt 1 bis 25 mol-% und insbesondere bevorzugt 5 bis 20 mol-% des Monomeren III).

Das Molverhältnis von Aldehyd/Keton/Säuregruppen/aromatische Verbindung beträgt bevorzugt 1 /1 bis 3,5/0,02 bis 2/0,001 bis 1, wobei aber je nach dem speziellen Verwendungszweck auch Abweichungen möglich sind.

In einer bevorzugten Ausführungsform weist das Kondensationsprodukt ein Molekulargewicht zwischen 1000 und 20000 g/mol auf, wobei das Molekulargewicht durch Gel-Permeations-Chromatographie und kalibriert auf einen Polyethylenglycol-Standard gemessen wird.

Aufgrund ihrer Eigenschaften können die erfindungsgemäßen Kondensationsprodukte als Dispergiermittel und insbesondere bevorzugt als Verflüssigungsmittel für wässrige Systeme verwendet werden.

Die gewünschten Eigenschaften lassen sich dabei durch geeignete Wahl der Ausgangsverbindungen und der Molverhältnisse steuern. Als Beispiele für wässrige Systeme, in denen erfindungsgemäße Produkte vorteilhaft eingesetzt werden können, seien genannt: Anorganische Bindemittelsuspensionen und -lösungen, Pigment- und Farbstoffdispersionen, Dispergiermittel für öl-in-Wasser-Emulsionen, wässrige Kaolin-oder Tonsuspensionen und Öl-Wasser-Kohle-Suspensionen. Infolge ihrer hohen Thermostabilität eignen sich die erfindungsgemäßen Kondensationsprodukte insbesondere sehr gut als Zusatzmittel für anorganische Bindemittel. Als Dispergiermittel sind sie beispielsweise zur Herstellung von Fließbeton oder Fließestrich geeignet, und infolge ihrer guten Thermostabilität insbesondere auch zur Verflüssigung von Tiefbohrzementmischungen, wofür aufgrund der auftretenden hohen Temperaturen eine hohe Temperaturbeständigkeit erforderlich ist. Erfindungsgemäße oberflächenaktive Mittel erniedrigen die Oberflächenspannung wässriger Lösungen und sind z. B. als Schäumerzusatz zur Herstellung von Schaumbeton geeignet. Ebenso können sie als Luftporen einführende Mittel für Mörtel oder Beton Verwendung finden. Eine weitere Anwendungsmöglichkeit besteht in der Mobilisierung von Restöl durch Tensid- oder Micellarfluten bei der tertiären Erdölförderung. Als Retentionsmittel eignen sie sich zur Herstellung von Schlämmen aus hydraulischen Bindemitteln, welche gutes Wasserrückhaltevermögen aufweisen, z. B. bei Tiefbohrzementschlämmen oder bei Fliesenklebern und als Verdickungsmittel eignen sie sich z. B. in der Erdöltechnik sehr gut zur Viskositätserhöhung wässriger Lösungen oder Suspensionen.

In einer bevorzugten Ausführungsform wird das erfindungsgemäße Kondensationsprodukt als Additiv für eine Baustoffzusammensetzung verwendet, welche ein anorganisches Bindemittel enthält. Bevorzugt werden hierbei 0,002 bis 2 Gew.-%, insbesondere 0,01 bis 1 Gew.-% und besonders bevorzugt 0,05 bis 0,5 Gew.-% des Kondensationsproduktes, bezogen auf den gesamten anorganischen Feststoffanteil der Baustoffzusammensetzung, eingesetzt.

In einer bevorzugten Ausführungsform handelt es sich bei dem Bindemittel um mindestens eines aus der Reihe Portlandzement, Kalk, Gips, Calciumsulfat-Hemihydrat, insbesondere Bassanit, wasserfreies Calciumsulfat, insbesondere Anhydrit, Flugasche, Hochofenschlacke, Puzzolane und gebrannten Ölschiefer.

Unter dem Begriff Puzzolane im Sinne der vorliegenden Erfindung werden Bindemittel verstanden, die nicht selbstständig abbinden, sondern nach Feuchtlagerung durch das Entstehen von Calciumhydroxid festigkeitsbildende Reaktionsprodukte liefern, wie beispielsweise Flugasche, Hochofenschlacke, Mikrosilika, sowie natürliche Puzzolane, wie z. B. Trass, Bims, Tonerden, Tuffstein und/oder Ignimbrit. Weitere nicht selbständig abbindende Puzzolane können Aschen aus der Verbrennung von Naturprodukten sein, wie beispielsweise Reisschalen und Kornspelzen.

In einer besonders bevorzugten Ausführungsform kann das erfindungsgemäße Kondensationsprodukt als Dispergiermittel für zementäre Systeme oder Gips eingesetzt werden. Hierbei kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel (z. B. für Trinkwasserrohre) handeln. Weiterhin bevorzugt ist der Einsatz der erfindungsgemäßen Kondensationsprodukte in gipsbasierten Spachtelmassen, gipsbasierten Fließestrichen oder Gipskartonplatten.

Besonders vorteilhaft kann das erfindungsgemäße Kondensationsprodukt hierbei eingesetzt werden, wenn die Baustoffmischung Smektit enthält, welches beispielsweise über Zuschlagstoffe oder Kalkstein in die Baustoffmischung eingetragen werden kann. Insbesondere im Vergleich zu Polycarboxylatether aber auch zu ß-Naphthalinsulfonat-Formaldehyd-Kondensaten zeigt das erfindungsgemäße Kondensationsprodukt praktisch keine Verringerung der Dispergierwirkung in Gegenwart von Smektit.

In einer bevorzugten Ausführungsform wird das Kondensationsprodukt in Baustoffzusammensetzung enthaltend zwischen 0,1 und 20 Gew.-% Smektit, bevorzugt 0,5 bis 15 Gew.-% verwendet. Unter dem Begriff Smektit werden alle quellfähigen Tonminerale der dioktaedrischen Montmorillonit-Reihe sowie der trioktaedrischen Saponit-Reihe verstanden.

Vorzugsweise werden die Kondensationsprodukte in Form von Lösungen oder Dispersionen, insbesondere in Form wässriger Lösungen oder Dispersionen, verwendet. Der Feststoffgehalt dieser Zubereitungen beträgt im allgemeinen 10 bis 70, insbesondere 20 bis 50 Gew.-%.

Es können auch zwei oder mehrere der erfindungsgemäßen Kondensationsprodukte mit gleicher, ähnlicher und/oder auch verschiedener Wirksamkeit verwendet werden, oder deren Gemische mit einem oder mehreren bekannten Zusatzmitteln mit gleicher, ähnlicher und/oder verschiedener Wirksamkeit, wie z. B. Gemische mit bekannten Dispergiermitteln, Tensiden oder Betonzusatzmitteln. Auf diese Weise lassen sich die Eigenschaften der Endprodukte oft noch zusätzlich verändern oder differenzieren.

Ein weiterer Gegenstand der vorliegenden Erfindung ist somit eine Zusammensetzung, umfassend bezogen auf die Trockenmasse,
10 bis 99 Gew.-% des erfindungsgemäßen Kondensationsproduktes sowie
1 bis 90 Gew.-% mindestens einer Verbindung aus der Reihe Polycarboxylatether, Ligninsulfonat, Melaminformaldhydsulfonat, Naphtalinformaldehydsulfonat, Polyarylether, phosphorylierte Polyalkoxylate, ß-Naphthalinsulfonat-Formaldehyd-Kondensate, Melaminkondensate, Sulfanilsäure-Phenolharze, Calciumnitrat, kristallines Calciumsilikathydrat, Phosphate, Gluconate, Saccarose, Stärkehydrolysate, Triethanolamin, Triisopropanolamin, Diethanolisopropanolamin, Ethanoldiisopropanolamin, Poly(hydroxyalkyliertes)polyethylenamin, N,N-Bis(2-hydroxypropyl)-N-(hydroxyethyl)amin, 1-(N,N-Bis(2-hydroxyethyl)amino)propan-2-ol, N,N,N',N'-Tetra-(2-hydroxyethyl)-ethylendiamin, Methyldiethanolamin, Monoethanolamin, Diethanolamin, Monoisoporopanolamin, Diisopropanolamin und Entschäumungsmittel.

Die erfindungsgemäßen Kondensationsprodukte können durch Umsetzung der Monomere unter alkalischen Bedingungen erhalten werden, wobei nach Art einer Eintopfreaktion vorgegangen werden kann. Als Ausführungsformen für die Herstellung der Kondensationsprodukte ist es bevorzugt Monomer I) und Monomer III) und eine Säuregruppen einführende Verbindung vorzulegen und anschließend das Monomer II) zuzugeben.

Die Reaktion springt im allgemeinen bereits bei gelindem Erhitzen an und verläuft dann exotherm, so dass in der Regel gekühlt wird. Zur Erzielung eines gleichmäßigen Produkts oder insbesondere beim Einsatz von weniger reaktionsfähigen Ausgangsprodukten ist eine Nacherhitzung zweckmäßig, die bis zu mehreren Stunden dauern kann.

In einer bevorzugten Ausführungsform werden die Monomere bei einem pH-Wert von 8 bis 14, insbesondere von 9 bis 13, umgesetzt. Die pH-Einstellung kann z. B. durch Zugabe von Hydroxiden von ein- oder zweiwertigen Kationen oder durch Vorlegen eines Säuregruppen einführenden Stoffs, wie z. B. von Natriumsulfit, erfolgen, welcher in wässriger Lösung unter alkalischer Reaktion hydrolysiert.

Die Umsetzung kann sowohl in homogener als auch in heterogener Phase durchgeführt werden. Die Umsetzung wird bevorzugt in Wasser oder einem Gemisch aus Wasser und einem polaren organischen Lösungsmittel durchführt, wobei der Anteil des Wassers vorzugsweise mindestens 50 Gew.-% beträgt. Als nichtwässrige Lösungsmittelzusätze kommen insbesondere polare organische Lösungsmittel in Betracht wie z. B. Alkohole oder Säureester. Die Umsetzung kann sowohl im offenen Gefäß als auch im Autoklaven durchgeführt werden, wobei es zweckmäßig sein kann, in einer Inertgasatmosphäre zu arbeiten, z. B. unter Stickstoff.

Die Kondensationsprodukte können, wenn erwünscht, aus ihren nach der Umsetzung erhaltenen Lösungen oder Dispersionen isoliert werden, z. B. durch Einengen am Rotationsverdampfer oder durch Sprühtrocknung. Die erhaltenen Lösungen oder Dispersionen können aber auch als solche direkt verwendet werden.

Als Monomere I) und Monomere II) werden die vorstehend genannten Aldehyde und Ketone eingesetzt, wobei auch Gemische von Ketonen und/oder Aldehyden eingesetzt werden können. Die Aldehyde und Ketone können sowohl in reiner Form als auch als Verbindung mit dem Säuregruppen einführenden Stoff zum Einsatz gelangen, z. B. als Bisulfit-Additionsverbindung. Sie können sowohl in wässriger als auch in nichtwässriger, beispielsweise alkoholischer Lösung vorgelegt oder zugegeben werden.

Die Umsetzung verläuft bei Aldehyden oder Ketonen mit kurzer Alkylkette besonders rasch und exotherm, während bei Verbindungen mit sterisch anspruchsvollen Substituenten wie z. B. Methyl-iso.-butyl-keton oder Benzylaceton, zur vollständigen Umsetzung eine lange thermische Nachbehandlung erforderlich ist.

Als Säuregruppen einführende Verbindungen können alle unter den Kondensationsbedingungen die Säuregruppen einführenden Verbindungen eingesetzt werden, wie z. B. die reinen Säuren, Salze der Säuren mit ein- bis dreiwertigen anorganischen oder organischen Kationen oder Additionsverbindungen, insbesondere Additionsverbindungen mit den erfindungsgemäß verwendeten Aldehyden und Ketonen. Beispiele dafür sind Sulfite, Hydrogensulfite, Pyrosulfite, Bisulfit-Additionsverbindungen von Aldehyden oder Ketonen, Amidosulfonsäure-salze, Taurin-Salze, Sulfanilsäure-Salze, Hydroxymethansulfinsäure-Salze, Aminoessigsäure-Salze und Phosphorigsäure-Salze.

Insbesondere werden durch die vorliegende Erfindung Produkte zur Verfügung gestellt, welche als Additive in bauchemischen Produkten, enthaltend ein anorganisches Bindemittel, keine Verfärbung verursachen. Dies ist besonders vorteilhaft, da derartige Verfärbungen den Einsatz der bereits bekannten Kondensationsprodukte stark einschränkt. Weiterhin sind diese Produkte thermostabil und eignen sich somit auch noch bei hohen Temperaturen z. B. als Zusatzmittel zur Verbesserung der Eigenschaften wässriger anorganischer Systeme. Weiterhin konnten überraschenderweise auch die Dispergiereigenschaften im Vergleich zu den bekannten Kondensationsprodukten weiter verbessert werden. Ein weiterer großer Vorteil der erfindungsgemäßen Kondensatiionsprodukte ist deren hohe Verträglichkeit gegenüber Tonen, insbesondere Smektit, wodurch diese auch in Baustoffzusammensetzungen eingesetzt werden können, in welchen die üblicherweise verwendeten Polycarboxylatether keine Wirkung zeigen.

Die nachfolgenden Beispiele verdeutlichen die Vorteile der vorliegenden Erfindung.

### Beispiele

### Polymersynthese

### Allgemeine Vorschrift

40 g Wasser wird vorgelegt. Anschließend wird die entsprechende Menge Comonomer zugegeben. Der pH-Wert wird auf pH = 10 eingestellt. Natriumsulfit wird in der Reaktionslösung gelöst und Aceton zugetropft und intensiv gerührt. Die Temperatur steigt dabei auf 30-32 °C. Die Lösung wird auf 56 °C erwärmt. Formaldehyd wird langsam zu getropft, wobei die Temperatur nicht über 70 °C steigen soll. Nach kompletter Zugabe wird die Temperatur auf 90 °C erhöht und mehrere Stunden geheizt bis das gewünschte Molekulargewicht erreicht ist.

| Polymer | Keton | Natriumsulfit | Formaldehyd (30%) | Aromatische Verbindung | Weitere Komponente | Mw [g/mol] |
|---|---|---|---|---|---|---|
| 1 | Aceton 1 mol | 0,43 mol | 2,5 mol | Gallussäure 0,15 mol | - | 15000 |
| 2 | Aceton 1 mol | 0,55 mol | 2,46 mol | Gallussäure 0,023 mol | Lävulinsäure. 0,045 mol | 16000 |
| 3 | Aceton 1 mol | 0,51 mol | 2,91 mol | Sulfanilsäure 0,068 mol | Gallussäure 0,023 mol | 16400 |
| 4 | Aceton 1 mol | 0,51 mol | 2,91 mol | Salicylsäure 0,068 mol | Gallussäure 0,023 mol | 16400 |
| Vergleichsbeispiel 2 | Cyclohexanon 1 mol | 0,3 mol Natriumpyrosulfit | 2,55 mol | - | - | 21000 |
| Vergleichsbeispiel 1 | Aceton 1 mol | 0,51 mol | 3 mol | - | - | 19000 |

### Robustheit gegenüber Tonverunreinigungen

Die Tonverträglichkeit wird mit einem Leimtest nachgewiesen.

Als Zement wird ein CEM I 42.5R aus Bernburg der Firma Schwenk Zement KG verwendet. Als tonhaltiges Material wird Siltstein, ein natürliches Puzzolan, verwendet. Dieses enthält 30 Gew.-% an Tonen, insbesondere Smektite.

Der Zement wird in einen Metallbecher mit 900 ml eingewogen. Die entsprechende Menge Wasser wird in ein extra Becherglas eingewogen. Das Wasser wird zum Zement gegeben und die Mischung 60 Sekunden gerührt. Anschließend wird die Mischung 60 Sekunden stehen gelassen. Mittels einer Spritze wird das Fließmittel als 30 %-ige wässrige Lösung zugegeben und der Leim 180 Sekunden gerührt. Der entstandene Zementleim wird in einen Minikonus mit unterem Innendurchmesser von 40 mm gegeben, welcher auf der angefeuchteten Glasplatte (Hägermanntisch mit 300 mm Durchmesser) steht. Nach Abheben des Konus wird das Ausbreitmaß an drei verschiedenen Stellen gemessen und der Mittelwert bestimmt. Das Ausbreitmaß wird nach 5, 10, 20 und 30 Minuten bestimmt. Vor jeder Messung wird die Mischung mit einem Spatel kurz aufgerührt.

Um nun die Tonempfindlichkeiten zu bestimmen wird auf kommerzielles BNS (Melcret 500L) kalibriert. Zuerst wird bei einem Verhältnis Wasser/Zement (w/b) von 0,33 in einem CEM I Zement die Dosierung der entsprechenden Fließmittel bestimmt um ein Ausbreitmaß von d=120 mm zu erhalten. Diese Dosierungen werden nun in einem Blend aus Zement und Puzzolan verwendet. Bei einer Mischung von 70 Gew.-% CEM I und 30 Gew.-% Puzzolan wird ein Verhältnis Wasser/Zement von 0,55 verwendet. An den unten gezeigten Beispielen lässt sich erkennen, dass Fließmittel auf Basis von Polycarboxylatethern nur eine geringe Verträglichkeit mit Tonen aufweisen, die erfindungsgemäßen Polymere jedoch eine bessere Performance als BNS zeigen.

Die Minimörteltests zeigen die Effizienz der erfindungsgemäßen Polymere im Vergleich zu konventionellen Fließmitteln.

| | | | | | Fließmaß [mm] | | | |
|---|---|---|---|---|---|---|---|---|
| Nr. | Zement | Additiv | w/b | Gew.-% | 3 min | 10 min | 20 min | 30 min |
| 1 | CEM I 42.5R | Glenium Sky 623 | 0,33 | 0,07 | 127 | 100 | 87 | |
| 2 | CEM I 42.5R | BNS | 0,33 | 0,4 | 48 | | | |
| 3 | CEM I 42.5R | 1 | 0,33 | 0,4 | 78 | 59 | | |
| 4 | CEM I 42.5R | Vergleichsbeispiel 2 | 0,55 | 0,4 | 49 | | | |
| 5 | CEM I 42.5R | Vergleichsbeispiel 1 | 0,55 | 0,4 | 58 | | | |
| 6 | CEM I 42.5R/ Pozzolan (7/3) | Glenium Sky 623 | 0,55 | 0,07 | 58 | 41 | 40 | |
| 7 | CEM I 42.5R/ Pozzolan (7/3) | BNS | 0,55 | 0,4 | 82 | 75 | 72 | 68 |
| 8 | CEM I 42.5R/ Pozzolan (7/3) | 1 | 0,55 | 0,4 | 141 | 134 | 121 | 113 |
| 9 | CEM I 42.5R/ Pozzolan (7/3) | Vergleichsbeispiel 2 | 0,55 | 0,4 | 85 | 89 | 79 | |
| 10 | CEM I 42.5R/ Pozzolan (7/3) | Vergleichsbeispiel 1 | 0,55 | 0,4 | 136 | 124 | 104 | |

| | | | | | | | | |
|---|---|---|---|---|---|---|---|---|
| min = Minuten w/b = Verhältnis Wasser/Zement | | | | | | | | |

Die Farbe der ausgehärteten Proben wird mit Mörtelprismen untersucht. Hierbei wird ein Mörtel mit einem Verhältnis Wasser/Zement von 0,3 hergestellt. Der verwendete Zement ist ein Zement der Klasse CEM I der Firma Schwenk KG aus dem Werk Bernburg. Die hierbei verwendeten Dosierungen des Fließmittels, bezogen auf dessen Feststoffgehalt, liegen bei 1 Gew.-%, bezogen auf den Zementgehalt.

| Additiv | Farbe |
|---|---|
| 1 | Leicht gelbliche Verfärbungen |
| 2 | Leicht gelbliche Verfärbungen |
| 3 | Leicht gelbliche Verfärbungen |
| 4 | Leicht gelbliche Verfärbungen |
| Vergleichsbeispiel 1 | Orange-rot fleckige Oberfläche |

### Minimörteltests

Die Minimörteltests wurden folgendermaßen durchgeführt:
Wasser/Zementwerte wurden auf 0,48 eingestellt. Als Sand/Zementverhältnis wurde 2,2 gewählt. Als Zement wurde ein CEM I 42.5R aus Bernburg der Firma Schwenk Zement KG verwendet.

### Vorgehensweise:

Zement und Sand wird im Metallbecher vorgelegt und verrührt. Das Fließmittel wir im Wasser aufgelöst und der Zementmischung zugefügt. Die Suspension wird 30 Sekunden auf Stufe I gemischt. Anschließend wird weiter 60 Sekunden auf Stufe 2 gemischt. Nach 20 Sekunden warten wird weitere 90 Sekunden auf Stufe 1 gemischt.

Die Mischung wird in einen Minikonus mit unterem Durchmesser von 40 mm eingefüllt. Nach dem Hochziehen wird das Fließmaß bestimmt.

| | | | | Fließmaß [mm] | | |
|---|---|---|---|---|---|---|
| Zement | Additiv | w/b | Gew.-% | 4 min | 10 min | 20 min |
| CEM I 42.5R | 1 | 0,48 | 0,35 | 24,9 | 22,2 | 19,9 |
| CEM I 42.5R | 2 | 0,48 | 0,35 | 23,2 | 21,1 | 20,0 |
| CEM I 42.5R | 3 | 0,48 | 0,35 | 23,9 | 22,6 | 22,0 |
| CEM I 42.5R | 4 | 0,48 | 0,35 | 24,1 | 22,1 | 20,0 |
| CEM I 42.5R | Vergleichsbeispiel 1 | 0,48 | 0,4 | 24,7 | 22,3 | 21,4 |
| CEM I 42.5R | Vergleichsbeispiel 2 | 0,48 | 0,8 | 24,9 | 23,0 | 22,1 |

| | | | | | | |
|---|---|---|---|---|---|---|
| min = Minuten w/b = Verhältnis Wasser/Zement | | | | | | |

Der Minimörteltest zeigt, dass die erfindungsgemäßen Additive bei geringerer Dosierung vergleichbare Ergebnisse bezüglich des Fließmaßes liefern.

## Patentansprüche

1. Säuregruppen und/oder deren Salze enthaltendes Kondensationsprodukt auf Basis von Monomeren, wobei die Monomere
I) mindestens ein Monomer mit einem Aldehydrest und
II) mindestens ein Monomer mit einem Ketonrest, welcher mindestens einen nicht aromatischen Rest trägt, umfassen, **dadurch gekennzeichnet,**
**dass** die Monomere weiterhin
III) mindestens ein Monomer auf Basis einer aromatischen Verbindung, welches keine Aldehydgruppen und keine Ketogruppen trägt, umfassen.

2. Kondensationsprodukt nach Anspruch 1, **dadurch gekennzeichnet, dass** die aromatische Verbindung III) am Aromaten mindestens einen Substituenten aus der Reihe -OH, -CH₃, -N(R¹)₂ und -OR² umfasst,
wobei
R¹ unabhängig voneinander für Wasserstoff, C₁-C₁₀-Alkyl und Benzyl und
R² für Wasserstoff, C₁-C₁₀-Alkyl und Benzyl steht
und/oder der Aromat mindestens ein Stickstoffatom im aromatischen Ring aufweist.

3. Kondensationsprodukt nach Anspruch 1 oder 2, **dadurch gekennzeichnet, dass** es sich bei der aromatischen Verbindung III) um mindestens eine aus der Reihe Gallussäure, Aminobenzolsulfonsäure, Anilin, Ammoniumbenzoesäure, Dialkoxybenzolsulfonsäure, Dialkoxybenzoesäure, Pyridin, Pyridinmonosulfonsäure, Pyridindisulfonsäure, Pyridincarbonsäure und Pyridindicarbonsäure handelt.

4. Kondensationsprodukt nach einem der Ansprüche 1 bis 3, **dadurch gekennzeichnet, dass** die Monomeren
25 bis 74 mol-% des Monomer I),
25 bis 74 mol-% des Monomer II) und
0,01 bis 30 mol-%, des Monomer III) umfassen.

5. Kondensationsprodukt nach einem der Ansprüche 1 bis 4, **dadurch gekennzeichnet, dass** es sich bei den Säuregruppen um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe und/oder deren Salze handelt.

6. Kondensationsprodukt nach einem der Ansprüche 1 bis 5, **dadurch gekennzeichnet, dass** es sich bei dem Monomer I) um mindestens einen Aldehyd aus der Reihe Paraformaldehyd, Formaldehyd, Acetaldehyd, Butyraldehyd, Glyoxal, Glutardialdehyd, Benzaldehyd, Naphtylaldehyd oder Naphtylsulfonsäurealdehyd, 3-Metoxy-propionaldehyd, Acetaldol, Acrolein, Crotonaldehyd, Furfurol, 4-Methoxy-furfurol, Propargylaldehyd, Glyoxylsäure, Propanalsäure, Butanalsäure, Pentanalsäure, Glucose, Saccarose, Zimtaldehyd, Lignine und Lignosulfonate handelt.

7. Kondensationsprodukt nach einem der Ansprüche 1 bis 6, **dadurch gekennzeichnet, dass** es sich bei dem Monomer II) um mindestens ein Keton aus der Reihe Methylethylketon, Aceton, Diacetonalkohol, Acetessigsäureethylester, Lävulinsäure, Methyl-vinylketon, Mesityloxid, 2,6-Dimethyl-2,5-heptadien-4-on, Acetophenon, 4-Methoxy-acetophenon, 4-Acetylbenzolsulfonsäure, Diacetyl, Acetylaceton, Benzoylaceton und Cyclohexanon handelt.

8. Kondensationsprodukt nach einem der Ansprüche 1 bis 7, **dadurch gekennzeichnet, dass** das Kondensationsprodukt ein Molekulargewicht zwischen 1000 und 20000 g/mol aufweist und das Molekulargewicht durch Gel-Permeations-Chromatographie und kalibriert auf einen Polyethylenglycol-Standard gemessen wird.

9. Verfahren zur Herstellung eines Kondensationsproduktes nach einem der Ansprüche 1 bis 8, **dadurch gekennzeichnet, dass** man die Monomere bei einem pH-Wert von 8 bis 14 umsetzt.

10. Verfahren zur Herstellung eines Kondensationsproduktes nach Anspruch 9, **dadurch gekennzeichnet , dass** man die Umsetzung in Wasser oder einem Gemisch aus Wasser und einem polaren organischen Lösungsmittel durchführt.

11. Verwendung des Kondensationsproduktes nach einem der Ansprüche 1 bis 8 als Additiv für eine Baustoffzusammensetzung, welche ein anorganisches Bindemittel enthält.

12. Verwendung nach Anspruch 11, **dadurch gekennzeichnet, dass** 0,002 bis 2 Gew.-% des Kondensationsproduktes, bezogen auf den gesamten anorganischen Feststoffanteil der Baustoffzusammensetzung, eingesetzt werden.

13. Verwendung des Kondensationsproduktes nach Anspruch 11 oder 12, **dadurch gekennzeichnet, dass** die Baustoffzusammensetzung zwischen 0,1 und 20 Gew.% Smektit enthält.

14. Verwendung des Kondensationsproduktes nach einem der Ansprüche 11 bis 13, **dadurch gekennzeichnet, dass** es sich bei dem Bindemittel um mindestens eines aus der Reihe Portlandzement, Kalk, Gips, Calciumsulfat-Hemihydrat, wasserfreies Calciumsulfat, Flugasche, Hochofenschlacke, Puzzolane und gebrannten Ölschiefer handelt.

15. Zusammensetzung, umfassend bezogen auf die Trockenmasse,
10 bis 99 Gew.-% des Kondensationsproduktes nach einem der Ansprüche 1 bis 8 sowie
1 bis 90 Gew.-% mindestens einer Verbindung aus der Reihe Polycarboxylatether, Ligninsulfonat, Melaminformaldhydsulfonat, Naphtalinformaldehydsulfonat, Polyarylether, phosphorylierte Polyalkoxylate, ß-Naphthalinsulfonat-Formaldehyd-Kondensate, Melaminkondensate, Sulfanilsäure-Phenolharze, Calciumnitrat, kristallines Calciumsilikathydrat, Phosphate, Gluconate, Saccarose, Stärkehydrolysate, Triethanolamin, Triisopropanolamin, Diethanolisopropanolamin, Ethanoldiisopropanolamin, Poly(hydroxyalkyliertes)polyethylenamin, N,N-Bis(2-hydroxypropyl)-N-(hydroxyethyl)amin, 1-(N,N-Bis(2-hydroxyethyl)amino)propan-2-ol, N,N,N',N'-Tetra-(2-hydroxyethyl)-ethylendiamin, Methyldiethanolamin, Monoethanolamin, Diethanolamin, Monoisoporopanolamin, Diisopropanolamin und Entschäumungsmittel.
